# EUROPÄISCHE PATENTSCHRIFT

(11) **EP 3 245 008 B1**
(45) Veröffentlichungstag und Bekanntmachung des Hinweises auf die Patenterteilung: **12.12.2018**
(21) Anmeldenummer: 16700318.5
(22) Anmeldetag: 09.01.2016
(51) Int. Cl.: B05B 14/43

(54) **VERFAHREN ZUM BETREIBEN EINER OBERFLÄCHENBEHANDLUNGSANLAGE**
METHOD FOR OPERATING A SURFACE TREATMENT PLANT
PROCÉDÉ PERMETTANT DE FAIRE FONCTIONNER UNE INSTALLATION DE TRAITEMENT DE SURFACE

(30) Priorität: 16.01.2015 DE 102015000585
(43) Veröffentlichungstag der Anmeldung: 22.11.2017
(73) Patentinhaber: Eisenmann SE, 71032 Böblingen (DE)
(72) Erfinder: FRÖHLICH, Georg, 75038 Oberderdingen (DE); RÖCKLE, Jürgen, 71106 Magstadt (DE)
(74) Vertreter: Ostertag & Partner Patentanwälte mbB
(86) Internationale Anmeldenummer: PCT/EP2016/000040
(87) Internationale Veröffentlichungsnummer: WO 2016/113129

(56) Entgegenhaltungen:
- WO-A1-2011/076600
- DE-A1- 4 211 465
- DE-U1-202010 012 437

## Beschreibung

Die Erfindung betrifft ein Verfahren zum Betreiben einer Oberflächenbehandlungsanlage, bei welchem
a) Overspray, der in einer Beschichtungskabine entsteht, von einem Luftstrom aufgenommen wird;
b) der mit Overspray beladene Luftstrom als Abluftstrom zu wenigstens einer Abscheideeinheit geführt wird, in der Overspray abgeschieden wird;
c) dem Abluftstrom in einem Zuführbereich stromauf der wenigstens einen Abscheideeinheit und/oder in einem Innenraum der wenigstens einen Abscheideeinheit ein einen Abscheideaggregatzustand aufweisendes Filterhilfsmaterial zugeführt wird, welches mit dem Overspray ein Abscheidegemisch bildet, das sich in oder an der wenigstens einen Abscheideeinheit abscheidet.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray oder Overspraypartikel immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, so dass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen in bekannter Weise bevorzugt Nassabscheidesysteme einerseits oder elektrostatisch arbeitende Trockenabscheider andererseits zum Einsatz.

Als Alternative zu gängigen, stationären Nass- und Trockenabscheidesystemen, die auch elektrostatisch arbeiten können, kommen auch Systeme mit austauschbaren Einweg-Abscheideeinheiten zum Einsatz, die nach Erreichen einer Grenzbeladung mit Overspray gegen unbeladene Abscheideeinheiten ausgetauscht und entsorgt oder gegebenenfalls recycelt werden. Die Aufbereitung und/oder Entsorgung von derartigen Abscheideeinheiten kann energetisch und auch im Hinblick auf die erforderlichen Ressourcen verträglicher sein als der Aufwand bei einem Nassabscheider oder einer elektrostatisch arbeitenden Abscheidevorrichtung.

Overspray hat in der Regel stark klebende Eigenschaften und weist zumeist flüssige Bestandteile auf, was die Abscheidung und Abtrennung des Oversprays aus der Abluft erschwert. Aus diesem Grund wird der mit Overspray beladenen Abluft ein Filterhilfsmaterial zugeführt, welches ein Abscheiden des Oversprays erleichtert. Die Overspraypartikel sind in der Regel verhältnismäßig klein und haben eine geringe Masse. Dies erschwert die Abscheidung zusätzlich.

Hierfür gibt es verschiedene bekannte Ansätze. So beschreibt die DE 20 2014 001 981 U1 beispielsweise, dass als Filterhilfsmaterial Eis zugeführt wird. Die Overspraypartikel werden ähnlich wie bei der Nassabscheidung an die nun allerdings gefrorene Flüssigkeit gebunden, wodurch die Masse und das Volumen der im Luftstrom befindlichen Partikel erhöht und deren Abscheiden in beispielsweise einem Zyklon oder sonstigem Filter erleichtert ist. Nach der Abscheidung entsteht wieder flüssiges Wasser, welches verhältnismäßig aufwendig von dem Overspray getrennt werden muss.

Aus der DE 10 2005 013 708 A1 ist ein Trockenabscheidesystem bekannt, bei welchem der mit Overspray beladenen Abluft Filterhilfsmaterial in Form von Steinmehl zugeführt wird. Dieses lagert sich als Sperrschicht an der Filteroberfläche ab und verhindert so ein Verkleben und Zusetzen der verwendeten Filter. Das Steinmehl muss danach als solches von dem Overspray getrennt bzw. teilweise noch mit Overspray benetzt entsorgt werden, was besonders aus umwelttechnischer Sicht problematisch sein kann.

Ein weiteres Trockenabscheidesystem ist aus der DE 10 2011 117 667 A1 bekannt. Dort sind Abscheideeinheiten vorhanden, die als oben erwähnte Einweg-Abscheideeinheiten konzipiert sind und nach Erreichen einer Grenzbeladung mit Overspray als beladene Einweg-Abscheideeinheit gegen eine leere Einweg-Abscheideeinheit ausgetauscht werden. Auch hier ist jedoch eine effektive Abscheidung wünschenswert. Allerdings würde ein Filterhilfsmaterial in diesem Fall in beträchtlichem Umfange zur Grenzbeladung der Einweg-Abscheideeinheiten beitragen, wodurch die Gesamtaufnahme an Overspray pro Einweg-Abscheideeinheit verringert würde.

Es ist daher Aufgabe der Erfindung, ein Verfahren der eingangs genannten Art bereitzustellen, welches diese Nachteile verringert.

Diese Aufgabe wird bei einem Verfahren der eingangs genannten Art dadurch gelöst, dass
d) ein Filterhilfsmaterial verwendet wird, welches in dem Abscheideaggregatzustand fest oder flüssig ist;
e) in der wenigstens einen Abscheideeinheit Bedingungen geschaffen werden, bei denen das Filterhilfsmaterial aus dem Abscheideaggregatzustand in einen gasförmigen Aggregatzustand übergeht, so dass sich das gasförmige Filterhilfsmaterial von dem Abscheidegemisch trennen kann.

Auf diese Weise kann das nach dem Abscheidevorgang gasförmige Filterhilfsmaterial von nachströmender Luft aufgenommen und aus der Abscheideeinheit entfernt werden, wobei es dann an anderer Stelle gesondert aus dem Luftstrom abgeschieden werden kann. Der abgeschiedene Overspray verbleibt in der Abscheideeinheit.

Das Verfahren kann besonders effektiv genutzt werden, wenn die wenigstens eine Abscheideeinheit als Einweg-Abscheideeinheit konzipiert ist und nach Erreichen einer Grenzbeladung als beladene Einweg-Abscheideeinheit gegen eine leere Einweg-Abscheideeinheit ausgetauscht wird. Bei diesem Konzept trägt dann das Filterhilfsmaterial nicht oder nur in geringem Umfang zur Grenzbeladung der Einweg-Abscheideeinheit bei, so dass die durch eine Abscheideeinheit zur Verfügung stehende Aufnahmekapazität vollständig oder zumindest weitgehend für Overspray genutzt werden kann, obwohl ein Filterhilfsmaterial eingesetzt wird.

Für ein effektives Einbringen des Filterhilfsmaterials in den Luftstrom ist es günstig wenn ein Filterhilfsmaterial verwendet wird, das zerstäubt oder vernebelt werden kann.

Im Falle eines Feststoff-Filterhilfsmaterial wird vorzugsweise ein Pulvermaterial als Filterhilfsmaterial verwendet.

Bevorzugt wird als Filterhilfsmaterial ein Material verwendet, welches eines oder mehrere der folgenden Materialien umfasst: Verflüssigbare Gase, insbesondere Kohlendioxid, Stickstoff, Luft, Sauerstoff, Wasserstoff, Edelgase sowie Kohlenwasserstoffe; Verbindungen, die bei Normalbedingungen einen erhöhten Sättigungsdampfdruck von über 10 hPa, bevorzugt über 100 hPa, haben, insbesondere Alkohole, Treibmittel oder Kältemittel; Verbindungen die bei Temperaturen bis 150°C einen Sättigungsdampfdruck von über 10 hPa, bevorzugt über 100 hPa, haben, insbesondere Wasser oder Glykole.

Es kann günstig sein, wenn als Filterhilfsmaterial ein Material verwendet wird, welches statisch aufladbar ist.

Nachfolgend wird nun ein Ausführungsbeispiel der Erfindung anhand der Zeichnungen näher erläutert. In diesen zeigen:
- Figur 1: eine Lackierkabine mit einer Abscheidevorrichtung für Overspray in einer Vorderansicht, bei welcher der mit Overspray beladenen Abluft auf ihrem Strömungsweg zu Abscheideeinheiten mit Hilfe einer Filterhilfseinrichtung ein Filterhilfsmaterial zugeführt wird;
- Figur 2: nochmals schematisch den Strömungsverlauf von Kabinenluft.

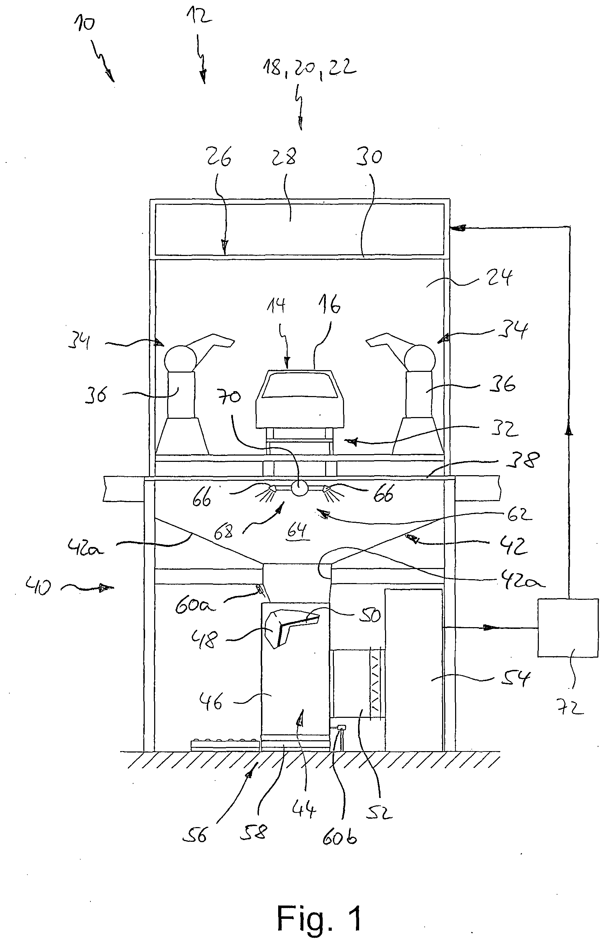

In Figur 1 ist mit 10 insgesamt eine Beschichtungskabine einer Oberflächenbehandlungsanlage 12 bezeichnet, in welcher Gegenstände 14 lackiert werden. Als Beispiel für zu lackierende Gegenstände 14 sind Fahrzeugkarosserien 16 gezeigt. Bevor diese zu einer solchen Beschichtungskabine 10 gelangen, wurden sie in nicht eigens gezeigten Vorbehandlungsstationen zum Beispiel gereinigt und entfettet.

Hiernach werden die Fahrzeugkarosserien 16 in aufeinander folgenden Beschichtungsstationen 18, 20 und 22 mit einem Primer, einem Basislack und einem Decklack versehen, wie es an und für sich bekannt ist; die verschiedenen Beschichtungsstationen 18, 20, 22 sind in Figur 1 lediglich durch die Bezugszeichen verdeutlicht. In jeder dieser Beschichtungsstationen 18, 20, 22 ist eine Beschichtungskabine 10 angeordnet, in welcher das jeweilige Beschichtungsmaterial auf die Fahrzeugkarosserie 16 appliziert wird.

In jeder Beschichtungskabine 10 der unterschiedlichen Behandlungsstationen 18, 20 und 22 entstehen unterschiedliche Arten von Overspray, d.h. allgemein ausgedrückt umfasst die Oberflächenbehandlungsanlage 12 mehrere Beschichtungskabinen 10, in denen unterschiedliche Arten von Overspray entstehen.

Die Beschichtungskabine 10 hat einen oben angeordneten Beschichtungstunnel 24 mit einer Decke 26, die in üblicher Weise als untere Begrenzung eines Luftzuführraumes 28 mit Filterdecke 30 ausgebildet ist.

Die Fahrzeugkarosserien 16 werden mit einem im Beschichtungstunnel 24 untergebrachten und an und für sich bekannten Fördersystem 32 von der Eingangsseite des Beschichtungstunnels 24 zu dessen Ausgangsseite transportiert. Im Inneren des Beschichtungstunnels 24 befinden sich Applikationseinrichtungen 34 in Form von mehrachsigen Applikationsrobotern 36, wie sie ebenfalls an und für sich bekannt sind. Mittels der Applikationsroboter 36 können die Fahrzeugkarosserien 16 mit dem entsprechenden Beschichtungsmaterial beschichtet werden.

Nach unten hin ist der Beschichtungstunnel 24 über einen begehbaren Gitterrost 38 zu einem darunter angeordneten Anlagenbereich 40 hin offen, in welchem von der Abluft mitgeführte Overspraypartikel von der Abluft getrennt werden.

Aus dem Luftzuführraum 28 strömt während des Beschichtungsvorgangs Luft nach unten durch den Beschichtungstunnel 24 hindurch zu dem Anlagenbereich 40, wobei die Luft im Beschichtungstunnel 24 vorhandenen Lack-Overspray aufnimmt und mit sich führt.

Diese nun mit Overspray beladene Abluft wird mit Hilfe einer Luftleiteinrichtung 42 zu mehreren Abscheideeinheiten 44 geleitet, welche beim vorliegenden Ausführungsbeispiel als Einweg-Abscheideeinheiten konzipiert und in Form von Einweg-Filtermodulen 46 vorhanden sind. Diese sind in Längsrichtung der Beschichtungskabine 10 hintereinander angeordnet, weshalb in Figur 1 lediglich ein solches Einweg-Filtermodul 46 zu sehen ist. Nachstehend wird weiter auf Einweg-Filtermodule 46 Bezug genommen; es können jedoch auch Abscheideeinheiten 44 verwendet werden, die nicht als EinwegSystem konzipiert sind. Hierfür kommen beispielsweise elektrostatisch arbeitende Abscheideeinheiten in Frage, wie sie an und für sich bekannt sind.

Jedes Filtermodul 46 kann in an und für sich bekannter Art und Weise zum Beispiel als Abscheidefilter oder als Trägheitsfilter oder auch als eine Kombination davon ausgebildet sein.

Die Luftleiteinrichtung 42 umfasst Luftleitbleche 42a, die den Strömungsweg der Abluft zumindest teilweise begrenzen und diese zu den Filtermodulen 46 führen. Im Betrieb ist jedes Filtermodul 46 strömungstechnisch und lösbar mit der Luftleiteinrichtung 42 verbunden. Die Abluft durchströmt in dem Filtermodul 46 einen Innenraum 48 und eine dort untergebrachte Filtereinheit 50, an der sich der Lack-Overspray abscheidet. Insgesamt ist jedes Einweg-Filtermodul 46 als austauschbare Baueinheit ausgebildet.

Die dann weitgehend von Overspraypartikeln befreite Luft strömt aus dem Filtermodul 46 in einen Zwischenkanal 52, über den sie in einen Sammelströmungskanal 54 gelangt. Die Luft wird über den Sammelströmungskanal 54 einer weiteren Aufbereitung und Konditionierung zugeführt und im Anschluss daran in einem Kreislauf wieder in den Luftzuführraum 28 geleitet, aus dem sie wieder von oben in den Beschichtungstunnel 24 einströmt.

Falls die Abluft durch die vorhandenen Filtermodule 46 noch nicht ausreichend von Overspraypartikeln befreit ist, können den Filtermodulen 46 noch weitere Filterstufen nachgelagert sein, denen die Abluft zugeführt wird und in denen beispielsweise Vliesfilter oder ebenfalls die oben angesprochenen elektrostatisch arbeitende Abscheidefilter eingesetzt werden. Gegebenenfalls können eine oder mehrere solcher weiteren Filterstufen auch in das Filtermodul 46 integriert sein.

Das Filtermodul 46 ist mittels einer nicht eigens gezeigten Verriegelungseinrichtung in seiner Betriebsstellung arretiert. Beim vorliegenden Ausführungsbeispiel kann das Filtermodul 46 strömungstechnisch mit der Luftleiteinrichtung 42 verbunden oder von dieser gelöst werden, indem es in horizontaler Richtung bewegt wird.

Allgemein hängt die Koppel- und Entkoppelbewegung jedoch von dem Zusammenspiel der Komponenten ab und kann auch vertikale Bewegungskomponenten haben.

Jedes Filtermodul 46 ist für die Aufnahme einer maximalen Materialmenge, d.h. für eine Grenzbeladung mit Material, ausgelegt, die von der Bauart des Filtermoduls 46 und den für dieses verwendeten Materialien sowie der Art des entstehenden Oversprays abhängt. Die bereits aufgenommene Materialmenge kann über eine Messeinrichtung 56 überwacht werden. In Figur 1 sind als sich ergänzende oder alternative Komponenten einer solchen Messeinrichtung 56 einerseits eine Waage 58 und andererseits Messfühler 60a und 60b gezeigt.

Mit Hilfe der Waage 58 wird die Beladung des Filtermoduls 46 anhand von dessen Gewicht ermittelt. Bei dem Messfühler 60a kann es sich beispielsweise um einen Schichtdickenmessfühler handeln, durch welchen die Dicke der sich an der Filtereinheit 50 aufbauende Materialschicht, die beim Abscheiden des Oversprays entsteht, erfasst werden kann. Aus der Dicke dieser Schicht können wiederum Rückschlüsse auf die Beladungsmenge des Filtermoduls 46 geschlossen werden. Der Messfühler 60b kann beispielsweise ein Messfühler für Feuchte-, Temperatur- oder Druck sein. Insbesondere in letzterem Fall kann das Vorliegen der Grenzbeladung mittels einer Differenzdruckbestimmung erfasst werden. Je größer die Beladung des Filtermoduls 46 ist, desto größer ist der durch das Filtermodul 46 aufgebaute Luftwiderstand.

Wenn ein Filtermodul 46 seine maximale Aufnahmekapazität erreicht, wird die Verriegelungseinrichtung gelöst und das voll beladene Filtermodul 46 aus dem unteren Anlagenbereich 40 der Beschichtungskabine 10 herausgefahren.

Insgesamt kann der Austausch eines oder mehrere Einweg-Filtermodule 46 voll- oder wenigstens halbautomatisch erfolgen. Alternativ kann ein solcher Austausch auch beispielsweise mit Hilfe eines nicht eigens gezeigten Hubwagens erfolgen, der von einem Werker bedient wird. Hierzu kann der Bodenbereich des Filtermoduls 46 in seiner Geometrie und seinen Abmessungen als standardisierte Tragstruktur und beispielsweise nach Vorgabe einer so genannten Euro-Palette ausgebildet sein.

Zuvor wird die Strömungsverbindung des auszutauschenden Filtermoduls 46 mit der Luftleiteinrichtung 42 mittels nicht eigens gezeigter Sperrschieber verschlossen. Nachdem das volle Filtermodul 46 entnommen worden ist, wird ein leeres Filtermodul 46 in die Betriebsstellung geschoben, in der dieses strömungsdicht mit der Luftleiteinrichtung 42 verbunden ist, worauf die Verriegelungseinrichtung wieder arretiert wird. Der Sperrschieber der Luftleiteinrichtung 42 wird wieder in eine Offenstellung gebracht, so dass das neu positionierte Filtermodul 46 von der Abluft durchströmt wird.

Das Einweg-Filtermodul 46 kann insgesamt, einschließlich seiner Filtereinheit 50, aus einem nassfesten Recyclingmaterial gefertigt sein. Allgemein ausgedrückt können eine Komponente, mehrere Komponenten oder alle Komponenten des Filtermoduls 46 aus einem nassfesten Recyclingmaterial gefertigt sein. Hierfür kommen beispielsweise Cellulosematerialien wie gegebenenfalls behandelte Papier- und Pappmaterialien, Wellkarton, Kartone mit stehender Welle, Kartone mit Wabenstruktur oder Wickelkartone, aber auch anderer Materialien wie z.B. MDF-Materialien in Frage. Der Bodenbereich des Filtermoduls 46 kann auch separat durch eine Euro-Palette aus Holz gebildet sein. Auch Kunststoffe wie insbesondere Polyethylen oder Polypropylen kommen in Frage.

Um nun die Abscheidung von Overspray in den Filtermodulen 46 zu verbessern, umfasst die Beschichtungskabine 10 eine Filterhilfseinrichtung 62, mit deren Hilfe dem Abluftstrom in einem Zuführbereich 64 stromauf der Abscheideeinheiten 44 bzw. der Einweg-Filtermodule 46 der Einweg-Filtermodule 46 ein Filterhilfsmaterial zugeführt werden kann, welches beim Zuführen einen Abscheideaggregatzustand hat. Alternativ oder ergänzend kann das Filterhilfsmaterial auch dem Innenraum 48 der Abscheideeinheiten 44 zugeführt werden.

Bei dem Zuführbereich 64 stromauf der Abscheideinheiten 44 handelt es sich bei dem vorliegenden Ausführungsbeispiel um den Bereich des Strömungsweges der Abluft zwischen dem Beschichtungstunnel 24 und den Abscheideeinheiten 44. Gegebenenfalls kann der Abluft das Filterhilfsmaterial jedoch auch noch im Beschichtungstunnel 24 zugeführt werden, zum Beispiel in einem Bereich unterhalb der Fahrzeugkarosserien 16.

Es wird ein Filterhilfsmaterial verwendet, welches in dem Abscheideaggregatzustand fest oder flüssig ist und in diesem Abscheideaggregatzustand mit dem Overspray ein Abscheidegemisch bildet, das sich in oder an den Abscheideeinheiten 44 abscheidet. Das Filterhilfsmaterial hat die Eigenschaft, dass es spätestens nach dem Abscheiden seinen Aggregatzustand zu gasförmig verändern kann. Ein festes Filtermaterial kann gegebenenfalls ohne Übergang in eine flüssige Phase sublimieren.

In den Abscheideeinheiten 44 herrschen nun Bedingungen oder werden nun Bedingungen geschaffen, bei denen das Filterhilfsmaterial aus dem Abscheideaggregatzustand in einen gasförmigen Aggregatzustand übergeht, so dass sich das gasförmige Filterhilfsmaterial von dem Abscheidegemisch trennen kann. Diese Bedingungen können entweder während des gesamten Abscheideprozesses kontinuierlich vorliegen oder in zeitlichen Intervallen geschaffen werden bzw. vorliegen. So kann der Phasenübergang des Filterhilfsmaterials durch Beeinflussung des thermodynamischen Gleichgewichts zum Beispiel durch Erhöhen der Umgebungstemperatur und/oder durch Verringerung des Umgebungsdruckes ermöglicht werden. Beispielsweise können die Abscheideeinheiten 44 entsprechend temperiert werden.

Zu Beschleunigung dieses Phasenüberganges kann neben einer Temperaturerhöhung auch ein schnellerer Abtransport von bereits gasförmigem Filterhilfsmaterial durch Erhöhung der Strömungsgeschwindigkeit der Luft im Bereich der Abscheidung beitragen. Auch eine große wirksame Oberfläche auf Grund einer kleinen Partikel- oder Tröpfchengröße des Filterhilfsmaterials ist hilfreich. Dies kann beispielsweise mechanisch durch Rühren des Filterhilfsmaterials in einem Sammelbehälter erfolgen. Die Abtrennung des Filterhilfsmaterials kann auch durch Trägerdampfdestillation, insbesondere eine Wasserdampfdestillation erfolgen, bei der durch Einleitung von Trägergas bzw. Trägerdampf und dessen Schleppwirkung die Phasenumwandlung begünstigt wird.

Hierdurch kann das nun gasförmige Filterhilfsmaterial von nachströmender Luft aufgenommen und mitgeführt und auf diese Weise aus den Abscheideeinheiten 44 entfernt werden, so dass dort zumindest weitgehend nur noch Overspray zurückbleibt. Der Luftstrom gibt somit in der Abscheideeinheit 44 einerseits das Abscheidegemisch aus Overspray und Filterhilfsmaterial ab und nimmt andererseits das gasförmige Filterhilfsmaterial auf.

Das Filterhilfsmaterial trägt somit nicht oder nur zu einem kleinen Teil zur Beladung der Abscheideinheiten 44 und konkret zur Grenzbeladung der Filtermodule 46 bei, so dass die Menge von abgeschiedenem Overspray pro Betriebszyklus einer Abscheideeinheit 44 höher ist als in dem Fall, dass das Filterhilfsmaterial in der jeweiligen Abscheideeinheit 44 verbleibt.

Beim in Figur 1 gezeigten Ausführungsbeispiel umfasst die Filterhilfseinrichtung 62 mehrere Abgabeelemente in Form von Düsen 66, welche knapp unterhalb des Gitterrostes 38 angeordnet in Längsrichtung der Beschichtungskabine 10 hintereinander angeordnet sind.

Immer zwei Düsen 66 sind als Düsenpaar 68 so angeordnet, dass Filterhilfsmaterial von der Mitte aus zu beiden Seiten in den Zuführbereich 64 abgegeben wird. Mit den Düsen 66 kann ein zerstäubbares oder vernebelbares Filterhilfsmaterial in den Zuführbereich 64 abgegeben werden.

Das Eindüsen des Filterhilfsmaterials kann in Bezug auf den Abluftstrom im Gleichstrom, im Gegenstrom, im Kreuzstrom oder in Kombinationen davon erfolgen. Es können auch bewegliche Düsen 66 verwendet werden, bei denen es eine rotierende Axialbewegung oder eine oszillierende Linearbewegung gibt. Hierdurch kann die Anzahl der Düsen 66 bei unveränderter Abdeckung der Strömungsquerschnittsfläche des Zuführbereichs 64 verringert werden. Gegebenenfalls reicht in diesem Fall eine einzelne Düse 66 statt eines Düsenpaars 68 aus. Eine Düse 66 kann beispielsweise auch in Strömungsrichtung unmittelbar vor der Abscheideeinheit 44 positioniert sein.

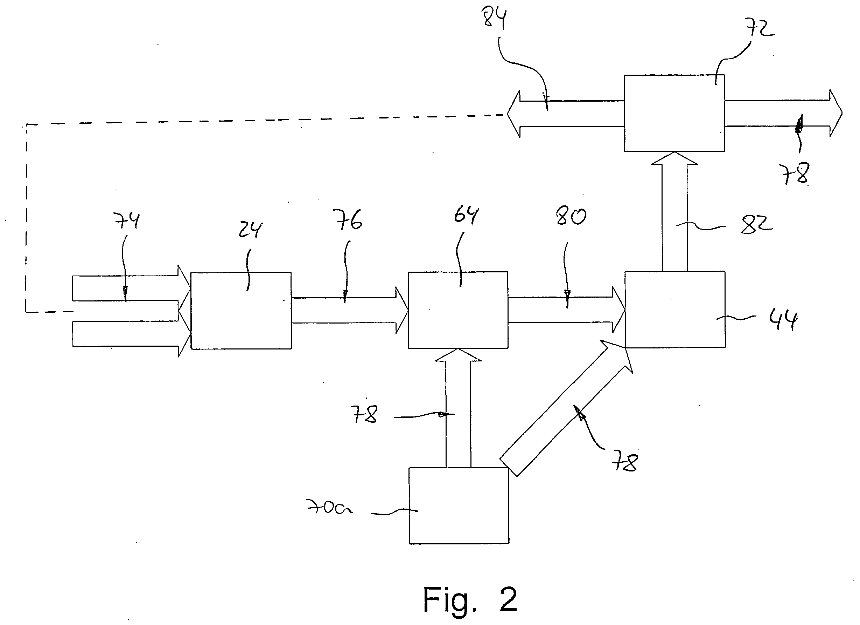

Die Düsen 66 werden über ein Versorgungsrohr 70 mit Filterhilfsmaterial versorgt, welches seinerseits aus einer in Figur 2 mit 70a bezeichneten Filterhilfsmaterialquelle gespeist wird. Förderkomponenten wie Pumpen, Leitungen und Steuereinrichtungen oder dergleichen für das Filterhilfsmaterial sind der Übersichtlichkeit halber nicht eigens gezeigt.

Das Filterhilfsmaterial wird in Strömungsrichtung der Abluft eingebracht. Bei einer Abwandlung können die Düsen 66 auch zu beiden Seiten der Luftleiteinrichtung 42 angeordnet sein, so dass das Filterhilfsmaterial von unten in Richtung entgegen der mit Overspray beladenen Abluft in den Zuführbereich 64 eingebracht wird. Bei einer weiteren Variante kann auch Filterhilfsmaterial direkt in die Abscheideeinheiten 44 eingebracht werden; dies ist in Figur 2 durch einen entsprechenden Strömungspfeil von der Filterhilfsmaterialquelle 70a zur Abscheideeinheit 44 veranschaulicht.

Die Düsen 66 und gegebenenfalls Diffusoren, wie sie an und für sich bekannt sind, können mit oder ohne Treibgasunterstützung betrieben werden und als Strahlpumpen, Venturi-Rohr oder dergleichen ausgebildet sein. Die Filterhilfseinrichtung 62 kann statt der Düsen 66 auch einen oder mehrere Rotationszerstäuber, elektrostatische Zerstäuber oder Ultraschallvernebler umfassen, wie sie an und für sich bekannt sind.

Die mit Overspray beladene Abluft nimmt das in den Zuführbereich 64 eingebrachte Filterhilfsmaterial auf. Dieses kann das Overspray gegebenenfalls auch entkleben und/oder Flüssigbestandteile des Oversprays aufnehmen oder binden, wodurch ein Verkleben der Filtermodule 46 verhindert werden kann.

Die Luft, welche in den Abscheideeinheiten 44 von Overspray befreit wurde und nunmehr in den gasförmigen Aggregatzustand übergegangenes Filterhilfsmaterial mit sich führt, gelangt aus dem Sammelströmungskanal 54 in eine Trenneinrichtung 72, in der das gasförmige Filterhilfsmaterial aus der Luft entfernt wird. Von dort gelangt die nun auch von Filterhilfsmaterial befreite Luft dann wie oben erläutert im Kreislauf wieder in den Luftzuführraum 28.

Figur 2 veranschaulicht nochmals schematisch den Strömungsweg der Luft und die einzelnen Reinigungsschritte, wobei die jeweils unterschiedlich zusammengesetzten Strömungen durch Pfeile veranschaulicht sind und auch Bezugszeichen tragen:
Zunächst strömt konditionierte Luft 74 aus dem Luftzuführraum 28 in den Beschichtungstunnel 24 und nimmt dort Overspray auf. Diese mit Overspray beladene Kabinenluft verlässt den Beschichtungstunnel 24 als Abluft 76, welche in den Zuführbereich 64 gelangt. Dort wird der Filterhilfsstoff - die in Figur 2 zugehörigen Pfeile tragen das Bezugszeichen 78 - in die Abluft 76 eingeblasen, wodurch Abscheideabluft 80 erzeugt wird, die dann in die Abscheideeinheiten 44 einströmt.

Dort scheidet sich zunächst ein Gemisch aus Overspray und Filterhilfsmaterial ab. Auf Grund der Betriebsbedingungen in den Abscheideeinheiten 44 geht das Filterhilfsmaterial dort in den gasförmigen Aggregatzustand über und wird von nachströmender Luft aufgenommen, so dass eine nur noch mit Filterhilfsmaterial beladenen Hilfsmaterialabluft 82 aus den Abscheideeinheiten 44 ausströmt.

Die Hilfsmaterialabluft 82 gelangt nun in die Trenneinrichtung 72, wo separiertes Filterhilfsmaterial und gereinigte Abluft 84 erzeugt wird, welche nach gegebenenfalls weiteren Konditionierungsschritten als Luft 74 zum Beschichtungstunnel 24 zurückgeführt wird.

Als Filterhilfsmaterial kommen beispielsweise folgende Materialien in Betracht: Verflüssigbare Gase, insbesondere Kohlendioxid, Stickstoff, Luft, Sauerstoff, Wasserstoff, Edelgase sowie Kohlenwasserstoffe; Verbindungen, die bei Normalbedingungen einen erhöhten Sättigungsdampfdruck von über 10 hPa, bevorzugt über 100 hPa, haben, insbesondere Alkohole, Treibmittel oder Kältemittel; Verbindungen die bei Temperaturen bis 150°C einen Sättigungsdampfdruck von über 10 hPa, bevorzugt über 100 hPa, haben, insbesondere Wasser oder Glykole.

Bei der Wahl des geeigneten Filterhilfsmaterials muss die Art des erzeugten Oversprays berücksichtigt werden. An das Filterhilfsmaterial sollen sich die Overspraypartikel agglomerieren. Dies wird beispielsweise dadurch begünstigt, dass das Filterhilfsmaterial mit einer Geschwindigkeit eingeblasen wird, die unter, insbesondere beträchtlich unter der Geschwindigkeit der strömenden Abluft liegt.

Hierdurch werden beim Einblasen des Filterhilfsmaterials Turbulenzen in der strömenden Abluft erzeugt, die eine Agglomeration der Overspraypartikel an das Filterhilfsmaterial begünstigen und auch dazu führen können, dass Overspraypartikel koaleszieren. Die Anzahl der einzelnen von der Abluft mitgeführten Overspraypartikel wird durch Koaleszenz dadurch reduziert, dass die Masse und das Volumen der Overspraypartikel vergrößert werden.

Wenn die Overspraypartikel an das Filterhilfsmaterial agglomerieren, hat das entstehende Overspray/Filterhilfsmaterial-Agglomerat Eigenschaften, die durch das Filterhilfsmaterial geprägt sind. So kann das Filterhilfsmaterial dazu führen, dass Overspraypartikel gefrieren, wodurch ihre Klebrigkeit verringert wird. Auf dem Strömungsweg der Abluft lagert sich dann weniger Overspray an den Wänden ab. Wenn sich viele Overspraypartikel an Partikel oder Tropfen des Filterhilfsmaterials anlagern, wird gleichsam eine Oversprayhülle erzeugt. Wenn der Filterhilfsstoff nach dem Abscheiden des Agglomerats gasförmig wird, bleibt diese Oversprayhülle in der Abscheideeinheit 44 zurück, welche ein verhältnismäßig großes Volumen bei geringer Masse hat. Durch das große Volumen kann die Abscheidung des Oversprays an einem Filter jedoch effektiv erfolgen.

Wenn das Filterhilfsmaterial eine Ladung trägt, die entgegengesetzt zu einer gegebenenfalls beim Overspray vorhandenen Ladung ist, begünstigt dies die Agglomeration des Oversprays an das Filterhilfsmaterial. Eine Koaleszenz der Overspraypartikel kann dagegen effektiver von Statten gehen, wenn das Filterhilfsmaterial und der Overspray gleiche Ladungen haben. Wenn durch das Einblasen des Filterhilfsmaterial ein Temperaturgradient im Einblasbereich erzeugt wird, kann dies ebenfalls die Agglomeration verbessern.

Abhängig von den Bedingungen, die auf dem Strömungsweg zwischen dem Zuführbereich 64 und den Abscheideeinheiten 44 herrschen, kann zumindest ein Teil des eingeblasenen Filterhilfsmaterial auch bereits vor Erreichen der Abscheideeinheiten 44 in den gasförmigen Zustand übergehen. Das Filterhilfsmaterial und der Verfahrensablauf können bei einer Abwandlung auch so aufeinander abgestimmt sein, dass das Filterhilfsmaterial vollständig oder zumindest weitgehend vollständig vor Erreichen der Abscheideeinheiten 44 in den gasförmigen Aggregatzustand übergeht. Das Filterhilfsmaterial kann auch zwei oder mehrere Materialtypen umfassen, von denen eines die Abscheideeinheiten 44 in Form des Abscheidegemisches aus Filterhilfsmaterial und Overspray erreicht, wogegen ein anderes bereits vor Erreichen der Abscheideeinheiten in den gasförmigen Aggregatzustand übergeht.

Ein derartiges Filterhilfsmaterial unterstützt die Koaleszierung der Overspraypartikel zu größeren Partikeln. Beispielsweise können beim Übergang des Filterhilfsmaterials in den gasförmigen Aggregatzustand Turbulenzen aufgebaut werden, welche die Koaleszierung unterstützen. Die dann gebildeten größeren Partikel gelangen dann mit ihrer größeren Masse und ihrem größeren Volumen ohne Filterhilfsmaterial in die Abscheideeinheiten, wo sie sich jedoch im Vergleich zu kleineren Partikeln effektiver abscheiden.

Eigenschaften des Filterhilfsmaterial können im weiteren Verlauf in der Trenneinrichtung 74 genutzt werden, um das Filterhilfsmaterial aus der Abluft zu entfernen. So kann das Filterhilfsmaterial magnetische Eigenschaften haben, so dass es durch eine magnetische Trenneinrichtung 74 aus der Abluft entfernt werden kann. Bei Filterhilfsmaterialien mit einer statischen Oberflächenladung oder auch eine einfach zu bewirkenden Ladung kann die Trenneinrichtung 74 zum Beispiel elektrostatisch arbeiten. Wenn das Filterhilfsmaterial eine entsprechend große Eigenmasse aufweist, kann die Trenneinrichtung 74 als Trägheitsabscheider ausgebildet sein. Wenn Filterhilfsmaterial verwendet wird, dessen Partikel oder Tropfen ein ausreichend großes Volumen haben, kann die Trenneinrichtung 74 auch als einfaches Strömungsfilter arbeiten.

## Patentansprüche

1. Verfahren zum Betreiben einer Oberflächenbehandlungsanlage (12), bei welchem
a) Overspray, der in einer Beschichtungskabine (10) entsteht, von einem Luftstrom aufgenommen wird;
b) der mit Overspray beladene Luftstrom als Abluftstrom zu wenigstens einer Abscheideeinheit (44) geführt wird, in der Overspray abgeschieden wird;
c) dem Abluftstrom in einem Zuführbereich (64) stromauf der wenigstens einen Abscheideeinheit (44) und/oder in einem Innenraum (48) der wenigstens einen Abscheideeinheit (44) ein einen Abscheideaggregatzustand aufweisendes Filterhilfsmaterial zugeführt wird, welches mit dem Overspray ein Abscheidegemisch bildet, das sich in oder an der wenigstens einen Abscheideeinheit (44) abscheidet, wobei
d) ein Filterhilfsmaterial verwendet wird, welches in dem Abscheideaggregatzustand fest oder flüssig ist;
**dadurch gekennzeichnet, dass**
e) in der wenigstens einen Abscheideeinheit (44) Bedingungen geschaffen werden, bei denen das Filterhilfsmaterial aus dem Abscheideaggregatzustand in einen gasförmigen Aggregatzustand übergeht, so dass sich das gasförmige Filterhilfsmaterial von dem Abscheidegemisch trennen kann.

2. Verfahren nach Anspruch 1, **dadurch gekennzeichnet, dass** die wenigstens eine Abscheideeinheit (44) als Einweg-Abscheideeinheit konzipiert ist und nach Erreichen einer Grenzbeladung als beladene Einweg-Abscheideeinheit gegen eine leere Einweg-Abscheideeinheit ausgetauscht wird.

3. Verfahren nach Anspruch 1 oder 2, **dadurch gekennzeichnet, dass** ein Filterhilfsmaterial verwendet wird, das zerstäubt oder vernebelt werden kann.

4. Verfahren nach einem der Ansprüche 1 bis 3, **dadurch gekennzeichnet, dass** als Filterhilfsmaterial ein Pulvermaterial verwendet wird.

5. Verfahren nach einem der Ansprüche 1 bis 4, **dadurch gekennzeichnet, dass** als Filterhilfsmaterial ein Material verwendet wird, welches eines oder mehrere der folgenden Materialien umfasst: Verflüssigbare Gase, insbesondere Kohlendioxid, Stickstoff, Luft, Sauerstoff, Wasserstoff, Edelgase sowie Kohlenwasserstoffe; Verbindungen, die bei Normalbedingungen einen erhöhten Sättigungsdampfdruck von über 10 hPa, bevorzugt über 100 hPa, haben, insbesondere Alkohole, Treibmittel oder Kältemittel; Verbindungen die bei Temperaturen bis 150°C einen Sättigungsdampfdruck von über 10 hPa, bevorzugt über 100 hPa, haben, insbesondere Wasser oder Glykole.

6. Verfahren nach einem der Ansprüche 1 bis 5, **dadurch gekennzeichnet, dass** als Filterhilfsmaterial ein Material verwendet wird, welches statisch aufladbar ist.

## Claims

1. Method for operating a surface treatment plant (12), in which
a) overspray, which occurs in a coating booth (10), is taken up by an airflow;
b) the overspray-laden airflow is fed as an exhaust airflow to at least one separating unit (44) in which the overspray is separated out;
c) a filtration auxiliary material, which features a separation aggregate state, is fed to the exhaust airflow in a feed region (64) upstream of the at least one separating unit (44) and/or in an interior (48) of the at least one separating unit (44), the filtration auxiliary material and the overspray forming a separation mixture which is deposited in or on the at least one separating unit (44),
wherein
d) a filtration auxiliary material, which is solid or liquid in the separation aggregate state is used,
**characterized in that**
e) conditions are created in the at least one separating unit (44) in which the filtration auxiliary material changes from the separation aggregate state into a gaseous aggregate state so that the gaseous filtration a auxiliary id material can separate from the separation mixture.

2. Method according to claim 1, **characterized in that** the at least one separating unit (44) is designed as a disposable separating unit and, after reaching a limit loading, is replaced as a laden disposable separating unit with an empty disposable separating unit.

3. Method according to claims 1 or 2, **characterized in that** a filtration auxiliary material which can be atomized or nebulized is used.

4. Method according to one of claims 1 to 3, **characterized in that** a powder material is used as filtration auxiliary material.

5. Method according to one of claims 1 to 4, **characterized in that** as filtration auxiliary material a material which comprises one or more of the following materials is used: liquefiable gases, in particular carbon dioxide, nitrogen, air, oxygen, hydrogen, noble gases and also hydrocarbons; compounds which during normal conditions have an increased saturation vapor pressure of over 10 hPa, preferably over 100 hPa, in particular alcohols, propellants or refrigerants; compounds which at temperatures of up to 150°C have a saturation vapor pressure of over 10 hPa, preferably over 100 hPa, in particular water or glycols.

6. Method according to one of claims 1 to 5, **characterized in that** a material which can be statically charged is used as filtration auxiliary material.

## Revendications

1. Procédé pour faire fonctionner une installation (12) de traitement de surfaces, dans lequel
a) de l'excédent de pulvérisation, engendré dans une cabine de revêtement (10), est prélevé par un courant d'air ;
b) ledit courant d'air chargé d'excédent de pulvérisation est dirigé, en tant que courant d'air d'évacuation, vers au moins une unité séparatrice (44) dans laquelle de l'excédent de pulvérisation est séparé ;
c) un matériau filtrant auxiliaire, présentant un état physique dissociatif, est délivré audit courant d'air d'évacuation dans une zone d'amenée (64), en amont de l'unité séparatrice (44) à présence minimale, et/ou dans un espace interne (48) de ladite unité séparatrice (44) à présence minimale, ledit matériau formant, avec l'excédent de pulvérisation, un mélange dissociatif se séparant dans ou sur ladite unité séparatrice (44) à présence minimale, sachant
d) qu'il est fait usage d'un matériau filtrant auxiliaire solide ou liquide, dans ledit état physique dissociatif ;
**caractérisé par**
e) la création, dans l'unité séparatrice (44) à présence minimale, de conditions dans lesquelles le matériau filtrant auxiliaire migre de l'état physique dissociatif à un état physique gazeux, de telle sorte que le matériau filtrant auxiliaire gazeux puisse se séparer d'avec le mélange dissociatif.

2. Procédé selon la revendication 1, **caractérisé par le fait que** l'unité séparatrice (44), à présence minimale, est conçue sous la forme d'une unité séparatrice jetable et est remplacée par une unité séparatrice jetable vide, en tant qu'unité séparatrice jetable chargée, après qu'une charge limite a été atteinte.

3. Procédé selon la revendication 1 ou 2, **caractérisé par** l'utilisation d'un matériau filtrant auxiliaire pouvant être atomisé ou pulvérisé.

4. Procédé selon l'une des revendications 1 à 3, **caractérisé par le fait qu'**un matériau pulvérulent est utilisé en tant que matériau filtrant auxiliaire.

5. Procédé selon l'une des revendications 1 à 4, **caractérisé par** l'utilisation, en tant que matériau filtrant auxiliaire, d'un matériau incluant l'un ou plusieurs des matériaux suivants : gaz liquéfiables, en particulier du dioxyde de carbone, de l'azote, de l'air, de l'oxygène, de l'hydrogène, des gaz nobles, ainsi que des hydrocarbures ; des composés présentant, dans des conditions normales, une pression accrue de vapeur de saturation supérieure à 10 hPa, de préférence supérieure à 100 hPa, en particulier des alcools, des agents d'expansion ou des agents réfrigérants ; des composés présentant, à des températures atteignant jusqu'à 150 °C, une pression de vapeur de saturation supérieure à 10 hPa, de préférence supérieure à 100 hPa, en particulier de l'eau ou des glycols.

6. Procédé selon l'une des revendications 1 à 5, **caractérisé par le fait qu'**un matériau pouvant être chargé statiquement est utilisé en tant que matériau filtrant auxiliaire.
